# FASCICULE DE BREVET EUROPEEN

(11) **EP 3 433 173 B1**
(45) Date de publication et mention de la délivrance du brevet: **12.06.2019**
(21) Numéro de dépôt: 17732499.3
(22) Date de dépôt: 23.05.2017
(51) Int. Cl.: B64G 1/50, B64G 1/10

(54) **ENGIN SPATIAL**
RAUMFAHRZEUG
SPACECRAFT

(30) Priorité: 23.05.2016 FR 1654593; 16.12.2016 FR 1662687
(43) Date de publication de la demande: 30.01.2019
(73) Titulaire: Airbus Defence and Space SAS, 31402 Toulouse Cedex 4 (FR)
(72) Inventeur: DELTOUR, Bernard, 31402 Toulouse (FR); LECONTE, Sylvain, 31402 Toulouse (FR); BEREND, Christophe, 31402 Toulouse (FR)
(74) Mandataire: Cabinet Plasseraud
(86) Numéro de dépôt international: PCT/FR2017/051280
(87) Numéro de publication internationale: WO 2017/203165

(56) Documents cités:
- WO-A1-01/81173
- FR-A1- 2 823 182
- US-A- 3 307 783
- HWANGBO H: "MOTORIZED THERMAL CONTROL SHADE", ENVIRONMENTAL AND THERMAL CONTROL SYSTEMS FOR SPACE VEHICLES -LES SYSTEMES DE REGULATION THERMIQUE ET D'ENVIRONMENT DESVEHICULES SPATIAUX. INTERNATIONAL SYMPOSIUM, XX, XX, 1 janvier 1983 (1983-01-01), pages 345-349, XP000884251,

## Description

La présente invention se situe dans le domaine des engins spatiaux.

En particulier, la présente invention concerne le domaine du contrôle thermique des satellites de télécommunication.

La dissipation thermique de la charge utile des satellites de télécommunication est assurée par des radiateurs montés sur les murs Nord et Sud. Ces radiateurs sont dimensionnés de manière à permettre d'évacuer la chaleur générée par la charge utile dans des conditions de fonctionnement extrême typiquement lorsque la charge utile fonctionne à plein régime, que la surface réfléchissante des radiateurs est dégradée et en supposant que l'on soit en période de Solstice et qu'en conséquence l'un des radiateurs soit réchauffé par un rayonnement solaire incident.

Dans des conditions de fonctionnement extrêmes inverses telles que par exemple lors du transfert du satellite de l'orbite d'injection vers l'orbite géostationnaire, la charge utile va subir des températures très froides. Elle sera alors réchauffée, par exemple par des réchauffeurs, pour la maintenir au-dessus de sa température minimum de fonctionnement. La puissance électrique nécessaire à ce réchauffage peut représenter jusqu'à 30% de la puissance électrique générée par les générateurs solaires. Il serait souhaitable d'utiliser cette puissance électrique à d'autres fins, par exemple pour augmenter la force propulsive du satellite lors de la phase de transfert et ainsi écourter la durée du transfert. Ceci est d'autant plus critique, lors de l'utilisation d'une propulsion électrique (seule ou en alternance avec de la propulsion chimique) car les temps de transferts durent plusieurs mois.

Le document FR 2 823 182 propose d'équiper les satellites de radiateurs déployables ayant une face radiante et une face isolante. Lors de la phase de transfert du satellite sur l'orbite géostationnaire, les radiateurs déployables sont repliés de sorte que leur face isolante soit dirigée vers l'espace. Une fois en orbite géostationnaire, ces radiateurs déployables sont déployés afin que leur surface radiante soit dirigée vers l'espace.

Toutefois, ces radiateurs déployables sont coûteux, volumineux et complexes à installer notamment en raison de la difficulté à réaliser et à monter des systèmes de transfert de chaleur des radiateurs vers les radiateurs déployables.

Par ailleurs, en position déployée, ces radiateurs déployables dépassent latéralement ou verticalement du corps du satellite de sorte que leur déploiement et leur repliement ne peut pas être commandé d'une manière décolérée de la position ou du mouvement des autres appendices du satellite. Ainsi, la position déployée du radiateur déployable n'est pas compatible avec toutes les positions des panneaux solaires, avec toutes les positions des antennes ou avec l'utilisation de certains propulseurs.

Le document WO 01/81173 décrit des micro-persiennes comprenant un matériau réfléchissant propre à s'enrouler ou à se dérouler lorsqu'une force électrostatique, magnétique, piézoélectrique ou à mémoire de forme est appliquée à ce matériau.

Le document US 3,307,783 décrit une surface thermostatique pour engin spatial constituée de bandes bi- métalliques propres à se recourber en fonction de la température.

Le document Hwangbo H « Motorized thermal control shade », environmental and thermal control systems for space vehicles XP000884251, décrit un dispositif d'isolation thermique comprenant une feuille souple isolante déplaçable entre une position dépliée dans laquelle la feuille souple recouvre une zone du radiateur et une position pliée sur elle-même dans laquelle la zone du radiateur est exposée vers l'espace.

La présente invention a pour but de proposer un engin spatial comportant un dispositif d'isolation thermique peu encombrant, léger et pouvant être mis en oeuvre indépendamment des positions des autres appendices.

A cet effet, l'invention a pour objet un engin spatial comprenant une caisse ayant au moins une face, au moins un radiateur porté par ladite face, et au moins un dispositif d'isolation thermique porté par le radiateur, ledit dispositif d'isolation thermique comprenant:
- un premier dispositif écran apte à recouvrir une première zone dudit radiateur, ledit premier dispositif écran comprenant une feuille thermiquement isolante et souple, et au moins deux ressorts propres à produire un effort de réaction constant, lesdits ressorts étant préformés de manière à s'enrouler sur eux-mêmes au repos, lesdits ressorts étant fixés sur la feuille isolante, lesdits ressorts ayant chacun une première extrémité fixée à un dispositif de traction et une seconde extrémité fixée sur le radiateur; et
- un dispositif de traction propre à tirer selon une direction de traction sur la première extrémité desdits ressorts du premier dispositif écran pour que la feuille isolante recouvre la première zone dans un mode dit mode déployé, ledit dispositif de traction étant apte à libérer la première extrémité desdits ressorts pour exposer la première zone vers l'espace dans un mode dit mode d'exposition.

Suivant des modes particuliers de réalisation, l'engin spatial comporte l'une ou plusieurs des caractéristiques suivantes :
- le premier dispositif écran comporte au moins deux câbles, chaque câble étant solidaire dudit dispositif de traction et de la première extrémité des ressorts, lesdits câbles étant intercalés entre deux enroulements des ressorts dans le mode d'exposition ;
- le premier dispositif écran comporte en outre une tige de support s'étendant selon une direction perpendiculaire à la direction de traction et au moins deux premières butées fixées sur le radiateur entre la feuille isolante et le dispositif de traction, lesdites premières butées étant propres à caler la tige de support au cours du lancement de l'engin spatial ;
- le dispositif de traction comporte :
- un arbre de traction monté rotatif autour d'un axe de rotation, ledit arbre de traction s'étendant perpendiculairement à la direction de traction, la première extrémité desdits ressorts étant solidaires dudit arbre de traction ; et
- un dispositif de verrouillage de la rotation de l'arbre de traction autour dudit axe de rotation ;
- le dispositif de traction comporte un actionneur propre à entraîner en rotation l'arbre de traction ;
- le dispositif de traction comporte en outre un dispositif d'amortissement propre à amortir la rotation de l'arbre de traction, lorsque le dispositif de verrouillage est déverrouillé ;
- le dispositif d'isolation thermique comporte en outre un deuxième dispositif écran apte à recouvrir une deuxième zone, ledit deuxième dispositif écran étant identique au premier dispositif écran, les ressorts dudit deuxième dispositif écran s'étendant parallèlement à la direction de traction ;
- le premier dispositif écran et le deuxième dispositif écran sont agencés d'un même côté du dispositif de traction, et dans lequel, dans le mode d'exposition, les ressorts du premier dispositif écran et les ressorts du deuxième dispositif écran s'enroulent sur eux-mêmes selon une même direction d'enroulement.
- la feuille isolante du deuxième dispositif écran est disposée dans le prolongement de la feuille isolante du premier dispositif écran selon la direction de traction ;
- la feuille isolante du deuxième dispositif écran est disposée dans le prolongement de la feuille isolante du premier dispositif écran selon une direction perpendiculaire à la direction de traction ;
- le dispositif de traction est agencé entre le premier dispositif écran et le deuxième dispositif écran et dans lequel, dans le mode d'exposition, les ressorts du premier dispositif écran s'enroulent sur eux-mêmes selon un premier sens d'enroulement et les ressorts du deuxième dispositif écran s'enroulent sur eux-mêmes selon un deuxième de sens d'enroulement, le deuxième sens d'enroulement étant opposée au premier sens d'enroulement ;
   la feuille isolante du premier dispositif écran présente une longueur supérieure à la longueur de la feuille isolante du deuxième dispositif écran, ladite longueur étant mesurée selon la direction de traction, et dans lequel l'arbre de traction supporte au moins deux poulies de diamètre supérieur au diamètre de l'arbre de traction, lesdits câbles du deuxième dispositif écran s'enroulés sur lesdites poulies.
- la feuille isolante du premier dispositif écran présente une largeur supérieure à la largeur du deuxième dispositif écran, ladite largeur étant mesurée selon une direction perpendiculaire à la direction de traction ;
- le premier dispositif écran comporte au moins deux rampes fixées au radiateur selon une direction parallèle à la direction de traction, au moins l'un parmi les ressorts et les extrémités des tiges de support étant propres à venir en appui contre lesdites rampes dans le mode déployé, lesdits rampes présentant des portions de rampe qui s'étendent en saillie par rapport au radiateur ;
- au moins un bord de la feuille isolante présente au moins une découpe ;
- L'engin spatial comporte un premier mécanisme d'engrenage fixé à l'extrémité libre d'un arbre de traction, un dispositif de renvoi d'angle couplé au premier mécanisme d'engrenage, un arbre de traction supplémentaire ayant un deuxième mécanisme d'engrenage couplé au dispositif de renvoi d'angle et au moins un dispositif écran supplémentaire fixé par des câbles à l'arbre de traction supplémentaire ; l'arbre de traction supplémentaire s'étendant selon la direction de traction ;
- lesdits ressorts sont des feuillards plat en acier inoxydable en forme de ruban, lesdits feuillards ayant une largeur comprise entre 5 et 30 millimètres ;
- la feuille isolante est une feuille de Kapton recouverte d'une couche d'aluminium.

L'invention sera mieux comprise à la lecture de la description qui va suivre, donnée uniquement à titre d'exemple et faite en se référant aux figures sur lesquelles :
- la figure 1 est une vue schématique en perspective d'un engin spatial selon la présente invention,
- la figure 2 est une vue en perspective d'un dispositif d'isolation thermique selon un premier mode de réalisation, ledit dispositif d'isolation thermique étant propre à être supporté par l'engin spatial illustré sur la figure 1 ;
- la figure 3 est une vue en perspective d'un ressort du dispositif d'isolation thermique illustré sur la figure 1 ;
- la figure 4 est un schéma en coupe du dispositif d'isolation thermique illustré sur la figure 3, représentant le principe de fonctionnement du dispositif d'isolation thermique au cours du mode d'exposition ;
- la figure 5 est un schéma en coupe du dispositif d'isolation thermique illustré sur la figure 3, représentant le principe de fonctionnement du dispositif d'isolation thermique au cours du mode de déploiement ;
- la figure 6 est une vue en perspective d'un dispositif d'isolation thermique selon un deuxième mode de réalisation, ledit dispositif d'isolation thermique étant propre à être supporté par l'engin spatial illustré sur la figure 1 ;
- la figure 7 est une vue en perspective d'un dispositif d'isolation thermique selon un troisième mode de réalisation, ledit dispositif d'isolation thermique étant propre à être supporté par l'engin spatial illustré sur la figure 1 ;
- la figure 8 est une vue en perspective d'un dispositif d'isolation thermique selon un quatrième mode de réalisation, ledit dispositif d'isolation thermique étant propre à être supporté par l'engin spatial illustré sur la figure 1 ;
- la figure 9 est une vue en perspective d'un dispositif d'isolation thermique selon un cinquième mode de réalisation, ledit dispositif d'isolation thermique étant propre à être supporté par l'engin spatial illustré sur la figure 1 ;
- la figure 10 est un schéma en coupe du dispositif d'isolation thermique illustré sur la figure 9, représentant le principe de fonctionnement du dispositif d'isolation thermique au cours du mode d'exposition ;
- la figure 11 est un schéma en coupe du dispositif d'isolation thermique illustré sur la figure 9, représentant le principe de fonctionnement du dispositif d'isolation thermique au cours du mode de déploiement ;
- la figure 12 est une vue en perspective d'un dispositif d'isolation thermique selon un sixième mode de réalisation, ledit dispositif d'isolation thermique étant propre à être supporté par un radiateur de l'engin spatial illustré sur la figure 1 ;
- la figure 13 est une vue en perspective d'un dispositif d'isolation thermique selon un septième mode de réalisation, ledit dispositif d'isolation thermique étant supporté par un radiateur de l'engin spatial illustré sur la figure 1 ;
- la figure 14 est une vue en perspective de deux dispositifs d'isolation thermique selon le septième mode de réalisation, ledit dispositif d'isolation thermique étant supporté par un radiateur de l'engin spatial illustré sur la figure 1 ;
- la figure 15 est une vue en perspective d'un dispositif d'isolation thermique selon le huitième mode de réalisation, ledit dispositif d'isolation thermique étant propre à être supporté par un radiateur de l'engin spatial illustré sur la figure 1 ;
- la figure 16 est une vue en perspective d'un dispositif d'isolation thermique selon le neuvième mode de réalisation, ledit dispositif d'isolation thermique étant propre à être supporté par un radiateur de l'engin spatial illustré sur la figure 1 ;
- la figure 17 est une vue en perspective d'un dispositif d'isolation thermique selon le dixième mode de réalisation, ledit dispositif d'isolation thermique étant propre à être supporté par un radiateur de l'engin spatial illustré sur la figure 1 ; et
- la figure 18 est une vue de face d'un onzième mode de réalisation d'un dispositif d'isolation thermique agencé sur un radiateur de l'engin spatial illustré sur la figure 1.

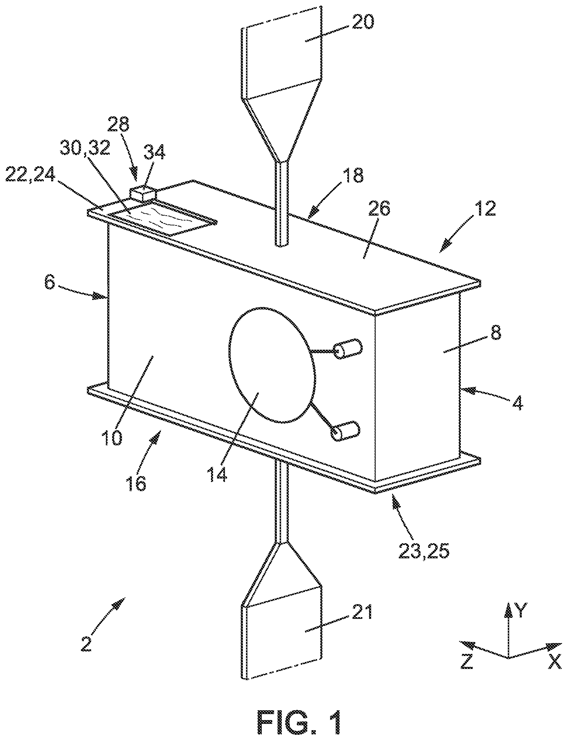

En référence à la figure 1, un engin spatial 2 selon l'invention se présente sous la forme d'une caisse 4 parallélépipédique. Cette caisse 4 présente toujours la même face dirigée vers la Terre, cette face étant appelée la face Terre 6. La face opposée et parallèle à la face Terre 6 est quant à elle appelée la face anti-Terre 8.

La face - X, aussi appelée face Est 10, et la face +X, aussi appelée face Ouest 12, sont des faces opposées, parallèles entre elles et perpendiculaires au plan de l'Equateur une fois le satellite à poste sur son orbite géostationnaire. Des antennes de communication 14 sont généralement fixées sur les faces -X 10 et +X 12. La face - Y, aussi appelée face Sud 16, et la face + Y, aussi appelée face Nord 18, sont deux autres faces de la caisse. Elles sont opposées, parallèles entre elles et perpendiculaires à l'axe Nord-Sud de la Terre.

L'engin spatial 2 comprend généralement un panneau solaire 20 et un radiateur 22 fixés sur la face +Y 18, et un panneau solaire 21 et un radiateur principal 23 fixés sur la face -Y 16.

Les radiateurs 22, 23 sont utilisés pour refroidir des équipements électroniques contenus dans la caisse. Ces équipements électroniques non représentés sur les figures sont reliés thermiquement aux radiateurs, par exemple, par l'intermédiaire de caloducs également non représentés.

Chaque radiateur 22, 23 de forme générale parallélépipédique, présente une face principale interne fixée sur la caisse et une face principale externe 24, 25 opposée à la face principale interne et située du côté de l'espace extérieur à l'engin spatial. En référence au repère orthonormé illustré sur la figure 1, les radiateurs 22, 23 s'étendent dans un plan (X, Z). Ils présentent des bords longitudinaux 26.

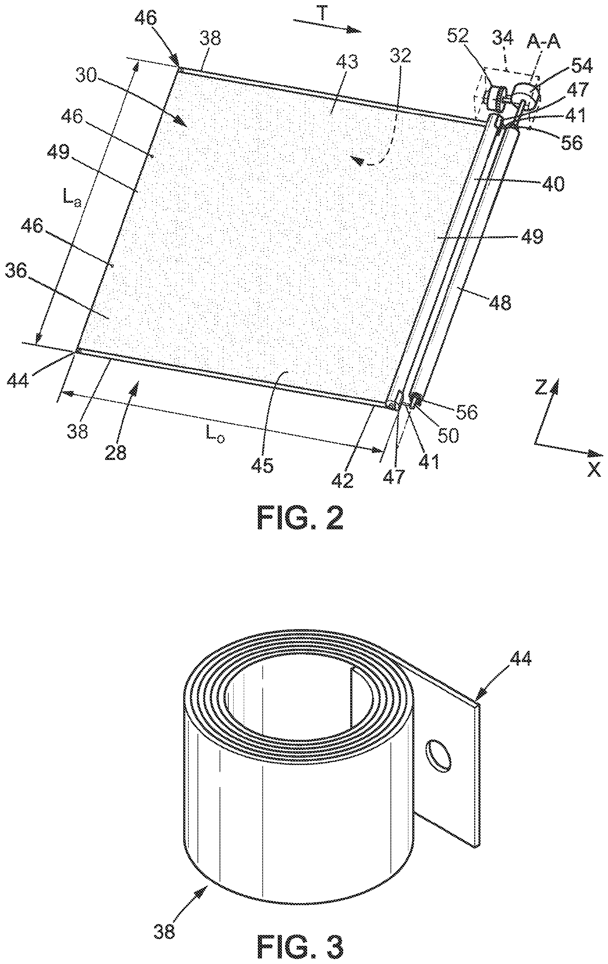

En référence aux figures 1 et 2, le radiateur 22 de la face Sud 18 supporte un dispositif d'isolation thermique 28 selon un **premier mode de réalisation** de l'invention.

Ce dispositif d'isolation thermique 28 comprend un premier dispositif écran 30 apte à recouvrir une première zone 32 du radiateur et un dispositif de traction 34 propre à commander le premier dispositif écran 30.

Le premier dispositif écran 30 comprend une feuille isolante thermiquement 36 fixée au radiateur 22 par des moyens de fixation 46, deux ressorts 38 fixés sur la feuille isolante, une tige de support 40 et deux câbles 41 solidaires des ressorts.

La feuille isolante thermiquement 36 est une feuille souple. Elle est, par exemple, réalisée dans une feuille de Kapton. Elle présente une face propre à réfléchir les rayonnements solaires et en particulier les rayonnements infrarouge. Cette face de réflexion est, par exemple, réalisée par dépôt d'une fine couche d'aluminium. Un bord latéral externe 39 de la feuille isolante 36 est fixé au radiateur 22 de manière à ce que sa face de réflexion soit située vers l'espace. En particulier dans l'exemple illustré sur la figure 1, le bord latéral externe 39 de la feuille isolante 36 est fixé à un bord longitudinal 26 de la face principale externe 24 du radiateur 22.

Cette fixation est mise en oeuvre par des moyens de fixation 46 tels que, par exemple, des rivets. La feuille isolante 38 présente, par exemple, une épaisseur de 50 µm. Selon le mode de réalisation représenté, la feuille isolante 38 présente une forme rectangulaire de longueur Lo et de largeur La. La longueur Lo est mesurée selon la direction de traction T

En référence à la figure 3, les ressorts 38 sont des ressorts exerçant un effort constant c'est-à-dire des ressorts propres à produire un effort de réaction constant quel que soit leur élongation. Ce sont donc des ressorts non linéaires. Les ressorts sont précontraints par fabrication afin de rester enrouler sur eux-mêmes au repos.

Les ressorts sont réalisés en métal, par exemple, en acier inoxydable.

Les ressorts 38 présentent chacun la forme d'un ruban réalisé dans un feuillard mince et plat. Chaque ruban présente une largeur comprise entre 5 et 30 millimètres et, de préférence, une largeur comprise entre 10 et 20 millimètres.

Les ressorts 38 présentent une première extrémité 42 située à l'intérieur de l'enroulement du ruban et une seconde extrémité 44 située en périphérie externe de l'enroulement du ruban. La première extrémité 42 de chaque ressort est fixée à une extrémité de la tige de support 40. La seconde extrémité 44 est fixée au radiateur par les moyens de fixation 46.

Un ressort 38 est fixé le long d'un bord longitudinal 43 de la feuille isolante 36. L'autre ressort 38 est fixé le long d'un bord longitudinal 45 opposé de la feuille isolante. Comme visible sur la figure 2, les ressorts 38 sont fixés de tout leur long sur la feuille isolante c'est-à-dire qu'une face principale de l'ensemble du ruban de la première extrémité 42 à la seconde extrémité 44 est fixée sur la feuille isolante.

La tige de support 40 est fixée sur un bord latéral interne 49 de la feuille isolante opposé au bord latéral externe 39 qui est fixé sur le radiateur.

Les câbles 41 sont fixés chacun, d'une part, à la tige de support 40 ou à la première extrémité 42 des ressorts 38 et, d'autre part, au dispositif de traction 34. Ce sont des câbles souples. Ils peuvent, par exemple, être réalisés en Kevlar ou en nylon.

Le premier dispositif écran 30 comprend également au moins deux premières butées 47 propres à caler les tiges de support 40 au cours du lancement de l'engin spatial. Les premières butées 47 sont fixées sur la face principale externe du radiateur 22 entre la feuille isolante 36 et le dispositif de traction 34.

Le dispositif de traction 34 comporte un arbre de traction 48 monté rotatif autour d'un axe de rotation A-A, des paliers 50 supportant et guidant l'arbre de traction 48, un dispositif de verrouillage 52 de la rotation de l'arbre de traction autour dudit axe de rotation et un actionneur 54 propre à entraîner en rotation l'arbre de traction 48.

Une extrémité de chaque câble 41 est fixée à un bout de l'arbre de traction 48. Lorsque le premier dispositif écran 30 recouvre la première zone 32 du radiateur, les câbles 41 sont enroulés sur l'arbre de traction 48.

Des poulies 56 peuvent être avantageusement montées sur l'arbre de traction. Lorsque des poulies sont montées sur l'arbre de traction, les câbles 41 sont fixés et enroulés sur les poulies 56.

Les paliers 50 sont fixés sur la face principale externe 24 des radiateurs.

Le dispositif de verrouillage 52 maintient un niveau de précontrainte défini sur le premier dispositif écran 30 de façon à ce que celui-ci endure des charges mécaniques importantes lors du lancement de l'engin spatial. Ce niveau de précontrainte n'est pas ressenti par l'actionneur 54. Le dispositif de verrouillage 52 permet ainsi d'éviter de fatiguer le moteur de l'actionneur 54 par les charges mécaniques de lancement. Avantageusement, ce dispositif permet de ne pas sur-dimensionner les capacités de blocage du moteur.

Le dispositif de verrouillage 52 est un mécanisme de retenue et de libération généralement appelé en anglais « Hold Release Mechanism » ou « HRM ». Il peut, par exemple, être constitué par un verrou à mémoire de forme qui, en se rétractant par chauffage, libère l'actionneur 54 de sa position de blocage. Un tel dispositif de verrouillage n'est utilisé qu'une seule fois, au cours du lancement de l'engin spatial.

En variante, les ressorts ne sont fixés que en quelques points de la feuille isolante 36.

L'actionneur 54 est, par exemple, un moteur pas à pas avec un réducteur. Il est propre à entraîner en rotation l'arbre de traction 48 dans un sens pour déployer la feuille isolante 36 sur la première zone du radiateur et dans un sens contraire pour enrouler la feuille isolante autour de la tige de support 40. Dans ce mode de réalisation, l'actionneur 54 contrôle la vitesse de d'enroulement et de déroulement des ressorts.

Lors du lancement de l'engin spatial, le dispositif de traction 34 tire selon une direction de traction T sur la première extrémité 42 des ressorts de manière à ce que la feuille isolante 36 recouvre la première zone 32. La direction de traction est perpendiculaire à l'arbre de traction 48 et est dirigée vers lui. Sur l'exemple illustré sur les figures, la direction de traction est dirigé selon la direction X du repère orthonormé (X, Y, Z). L'intérieur de la caisse 4 est alors isolé thermiquement par le premier dispositif écran 30. Le dispositif d'isolation thermique 28 est dans un mode de fonctionnement appelé mode déployé.

Dans ce mode déployé, le dispositif de verrouillage 52 est verrouillé. La tige de support 40 est mise en butée contre les premières butées 47. Les câbles 41 sont enroulés autour de l'arbre de traction 48 ou autour des poulies 56. La feuille isolante 36 et les ressorts 38 s'étendent dépliés le long de la première zone 32 du radiateur. La feuille isolante 36 et les ressorts 38 sont alors tendus entre leur seconde extrémité 44 fixée au bord 26 du radiateur et leur première extrémité 42 tirée par les câbles 41. Les ressorts 38 cherchent à reprendre leur courbure au repos de sortent qu'ils appliquent une force F dirigée vers la face principale externe du radiateur. La feuille isolante 36 est ainsi plaquée contre la face principale externe du radiateur par les ressorts 38. Avantageusement, dans cette position, la feuille isolante 36 n'est pas nécessairement tendue. De sorte qu'elle n'est pas soumise à la propagation de fissure générée par des impacts de micrométéorites.

Une fois l'engin spatial en orbite, le dispositif de verrouillage 52 est déverrouillé. Puis, le dispositif d'isolation thermique 28 est mis dans un mode de fonctionnement, dit mode d'exposition. A cet effet, le dispositif de traction 34 libère la première extrémité 42 des ressorts pour exposer la première zone 32 vers l'espace.

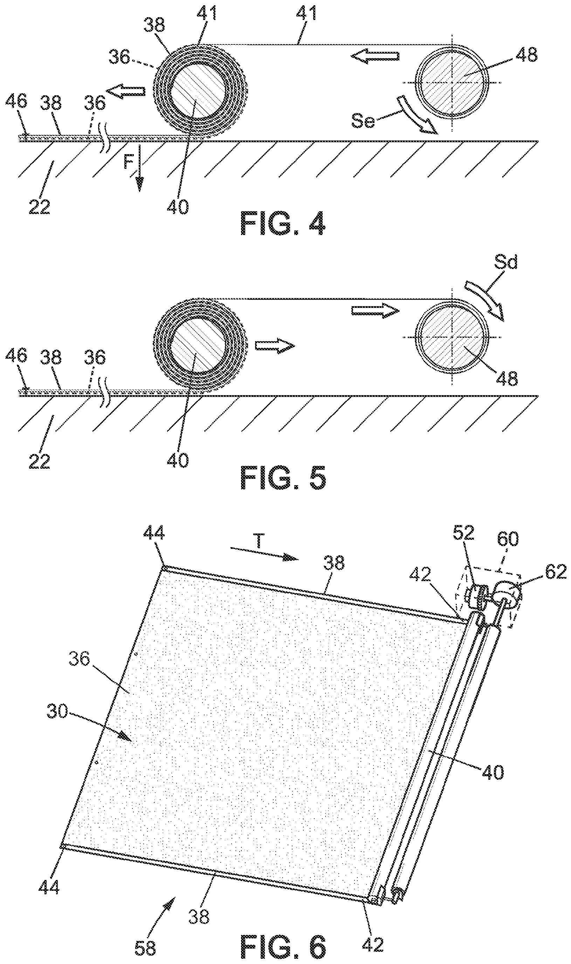

En particulier, en référence à la figure 4, dans le dispositif d'isolation thermique selon ce premier mode de réalisation, l'actionneur 54 entraine en rotation l'arbre de traction 48 dans un sens anti-horaire Se. La partie de câble 41 enroulée autour de l'arbre de traction 48 se déroule. Le déroulement des câbles 41 entraine l'enroulement des ressorts 38. Les ressorts 38 reprennent leur forme enroulée au repos. En reprenant leur forme au repos, les ressorts 38 enroulent avec eux la feuille isolante 36 et les câbles 41, autour de la tige de support 40, comme visible sur la figure 4. Les câbles 41 s'intercalent entre les enroulements des ressorts 38 et de la feuille isolante 36. Les câbles 41 sont tendus de façon constante car la force naturelle du ressort à force constante les maintient tendus.

Le premier dispositif écran 30 selon ce premier mode de réalisation permet également de recouvrir la première zone 32 une fois l'engin spatial en orbite pour isoler l'intérieur de la caisse 4 afin de répondre à des besoins spécifiques. Le dispositif d'isolation thermique 28 est alors mis dans un mode de fonctionnement, dit mode de déploiement.

A cet effet, en référence à la figure 5, l'actionneur 54 met en rotation l'arbre de traction 48 dans un sens horaire Sd. Les câbles 41 s'enroulent autour de l'arbre de traction 48 ou autour des poulies 56. Le câble 41 tire sur l'enroulement formé par les ressorts 38, la feuille isolante 36 et une partie des câbles 41. Sous l'action de la tension exercée par les câbles 41, les ressorts 38 et la feuille isolante 36 se déroulent et se déploient une nouvelle fois sur la première zone 32 du radiateur.

En variante, l'actionneur 54 peut soit commander la vitesse de rotation l'arbre de traction 48 selon une unique valeur de vitesse figée avant le lancement, soit offrir des vitesses variables (par exemple par télécommande) en fonction des besoins de la mission. La variabilité de la vitesse de rotation peut s'entendre soit entre deux utilisations des dispositifs d'isolation thermique (par exemple passage en mode d'exposition ou en mode de déploiement), soit au sein d'une même utilisation afin d'offrir une capacité d'accélération ou de ralentissement (par exemple à l'approche des positions extrêmes des dispositifs d'isolation thermique) afin de réduire la durée de l'opération.

En référence à la figure 6, le dispositif d'isolation thermique 58 selon un **deuxième mode de réalisation** de l'invention, est identique au dispositif d'isolation thermique 38 selon le premier mode de réalisation à l'exception du fait que le dispositif de traction 60 ne comporte pas d'actionneur 54 mais comporte un dispositif d'amortissement 62.

Contrairement au dispositif d'isolation thermique 38 selon le premier mode de réalisation, le dispositif d'isolation thermique 58 selon le deuxième mode de réalisation ne peut pas être mis dans un mode de fonctionnement dit mode de déploiement. Le dispositif d'isolation thermique 58 selon le deuxième mode de réalisation est monté sur l'engin spatial 2 dans une configuration en mode déployé. Une fois en orbite, le dispositif d'isolation thermique 58 est disposé dans mode d'exposition. Puis, le dispositif d'isolation thermique 58 est maintenu dans cette position.

Le dispositif d'amortissement 62 assure le contrôle de la vitesse d'enroulement de la feuille isolante 36 sur la tige de support 40, au cours du mode d'exposition. Le dispositif d'amortissement 62 est constitué, par exemple, par un frein centrifuge ou un frein à courant de Foulcault.

En fonctionnement, au cours du mode d'exposition, le dispositif de verrouillage 52 libère la première extrémité 42 des ressorts. Comme les ressorts 38 cherchent à reprendre leur forme enroulée au repos, ils exercent un effort constant sur les câbles 4 dans un sens opposé à la direction de traction T. L'arbre de traction 48 est mis en rotation par l'effort exercé par les ressorts 38. Le dispositif d'amortissement 62 limite la vitesse de rotation de l'arbre de traction 48 et ainsi, régule la vitesse d'enroulement de la feuille isolante 36 et des ressorts 38 au cours du mode d'exposition.

Avantageusement, l'actionneur 54 et le dispositif d'amortissement 62 peuvent être redondés. Ainsi, le dispositif d'isolation thermique selon l'invention est robuste.

Selon une variante non représentée, le dispositif de traction 60 comporte uniquement une poulie et un dispositif amortisseur.

Selon une autre variante non représentée, le dispositif de traction 34 comporte deux câbles souples et deux actionneurs rotatifs chacun propres à commander l'enroulement d'un câble.

En variante, le dispositif d'isolation thermique selon l'invention comporte un dispositif d'urgence de sectionnement des câbles non représenté. En cas de panne, par exemple en cas de blocage de l'un des éléments du dispositif dans une position de déploiement (ie. Recouvrement des radiateurs), ce dispositif d'urgence sectionne les câbles 41. Les ressorts préformés pour se replier sur eux-mêmes garantissent que la surface externe des radiateurs soient exposés.

Comparé à des solutions dans lesquelles le dispositif écran serait enroulé/déroulé directement sur l'arbre de traction, le dispositif selon l'invention est plus fiable pour la mission satellite. En effet, selon l'invention, seuls les câbles 41 sont enroulés sur l'arbre de traction. Ainsi, si le dispositif de traction venait à tomber en panne, il serait possible d'utiliser le dispositif d'urgence de sectionnement des câbles afin que les dispositifs écran s'enroulent automatiquement sur eux-mêmes sans possibilité de blocage, découvrant ainsi les radiateurs. Pour pallier à cette perte de fonction, il suffirait simplement de réchauffer l'intérieur du satellite à l'aide des réchauffeurs lorsque nécessaire. Cette situation serait bien moins dommageable que les cas où des dispositifs écrans thermiques enroulés sur l'arbre de traction seraient en panne en position « mode de déploiement », c'est-à-dire recouvrant entièrement les radiateurs. Dans une telle situation, suite à l'utilisation de la charge utile, la température à l'intérieur du satellite pourrait augmenter significativement et les radiateurs seraient empêchés de réaliser leur fonction de dissipation thermique, pouvant alors causer une dégradation irrémédiable de certains équipements électroniques.

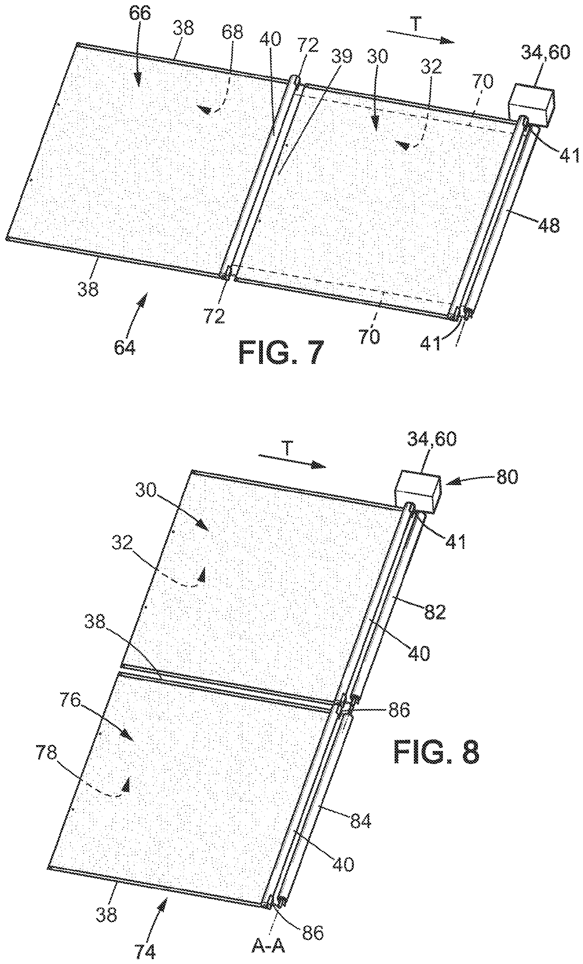

En référence à la figure 7, le dispositif d'isolation thermique 64 selon un **troisième mode de réalisation** de l'invention, est identique au dispositif d'isolation thermique 38 selon le premier mode de réalisation à l'exception du fait qu'il comporte un deuxième dispositif écran 66 apte à recouvrir une deuxième zone 68 du radiateur située dans le prolongement de la première zone 32 dans selon la direction de traction T.

Le premier 30 et le deuxième 66 dispositifs écrans sont commandés par un même dispositif de traction 34, 60. Ce dispositif de traction 34, 60 peut comprendre un actionneur 54 ou un dispositif d'amortissement 62.

Le premier 30 et le deuxième 66 dispositifs écrans sont situés du même côté de l'arbre de traction 48. En particulier, le deuxième dispositif écran 66 est adjacent et dans le prolongement du premier dispositif écran 30 selon la direction de traction T.

Le deuxième dispositif écran 66 est identique au premier dispositif écran 30 à l'exception du fait que les câbles 70 du deuxième dispositif écran présentent une plus grande longueur que les câbles 41 du premier dispositif écran. Les câbles 70 du deuxième dispositif écran sont également fixés à l'arbre de traction 48 ou à des poulies 56 solidaires de l'arbre de traction. L'enroulement des câbles 70 du deuxième dispositif écran sur l'arbre de traction 48 est disposé à une distance prédéfinie de l'enroulement des câbles 41 du premier dispositif écran.

La tige de support 40 du deuxième dispositif écran s'étend parallèlement à la tige de support 40 du premier dispositif écran 30. En particulier, la tige de support 40 du deuxième dispositif écran est adjacente et parallèle au bord latéral externe 39 de la feuille isolante 36 du premier dispositif écran.

Le deuxième dispositif écran 66 comporte des deuxièmes butées 72 de calage de la tige de support 40 du deuxième dispositif écran. Ces deuxièmes butées 72 sont fixées sur la face principale externe 24 du radiateur en regard et à quelques centimètres du bord latéral externe 39 de la feuille isolante 36 du premier dispositif écran 30.

Les ressorts 38 dudit deuxième dispositif écran 66 s'étendent parallèlement à la direction de traction T. Dans le mode d'exposition, les ressorts 38 du premier dispositif écran 30 et les ressorts 38 du deuxième dispositif écran 66 s'enroulent sur eux-mêmes selon une même direction d'enroulement.

Le premier 30 et le deuxième 66 dispositifs écrans du dispositif d'isolation thermique selon le troisième mode de réalisation fonctionne de la même manière que les dispositifs d'isolation thermique selon le premier et le deuxième mode de réalisation, les feuilles isolantes 36 des deux dispositifs écrans étant commandées simultanément par la rotation de l'arbre de traction 48.

En référence à la figure 8, le dispositif d'isolation thermique 74 selon un **quatrième mode de réalisation** de l'invention, est identique au dispositif d'isolation thermique 38 selon le premier mode de réalisation à l'exception du fait qu'il comporte un deuxième dispositif écran 76 apte à recouvrir une deuxième zone 78 du radiateur située dans le prolongement de la première zone 32 selon une direction perpendiculaire à la direction de traction T.

Le premier 30 et le deuxième 76 dispositifs écrans sont commandés par un même dispositif de traction 80. Le dispositif de traction 80 peut comprendre un actionneur 54 ou un dispositif d'amortissement 62. Ce dispositif de traction 80 comporte un premier arbre de traction 82 et un deuxième arbre de traction 84 montés sur un même axe de rotation A-A. Le premier 30 et le deuxième 76 dispositifs écrans sont situés du même côté des premier et deuxième arbres de traction 82, 84.

Le deuxième dispositif écran 76 est adjacent et dans le prolongement du premier dispositif écran 30 selon une direction perpendiculaire à direction de traction T.

Selon une variante non représentée, le premier arbre de traction 82 et le deuxième arbre de traction 84 sont interconnectés au moyen d'un dispositif de type boîte de vitesse. Ainsi, pour une vitesse donnée de rotation du premier arbre de traction 82, différents rapports de vitesse de rotation sont possibles pour le deuxième arbre de traction 84. Ce rapport peut être figé avant le lancement ou être variable par télécommande en fonction des besoins.

Selon une variante non représentée, le dispositif de traction comporte un unique arbre de traction de longueur supérieure à la largeur La de la feuille isolante du premier dispositif écran 30 additionnée de la largeur La de la feuille isolante du deuxième dispositif écran 66.

Les câbles 41 du deuxième dispositif écran 76 sont fixés au deuxième arbre de traction 84 ou à des poulies solidaires du deuxième arbre de traction 84.

La tige de support 40 du deuxième dispositif écran s'étend dans le prolongement de la tige de support 40 du premier dispositif écran 30.

Le deuxième dispositif écran 76 comporte des deuxièmes butées 86 de calage de la tige de support 40 du deuxième dispositif écran. Ces deuxièmes butées 86 sont fixées sur la face principale externe 24 du radiateur en regard et à courte distance de chaque bout du deuxième arbre de traction 84.

Les ressorts 38 du deuxième dispositif écran 66 s'étendent parallèlement à la direction de traction T. Dans le mode d'exposition, les ressorts 38 du premier dispositif écran 30 et les ressorts 38 du deuxième dispositif écran 66 s'enroulent sur eux-mêmes selon une même direction d'enroulement.

Le premier 30 et le deuxième 76 dispositifs écrans du dispositif d'isolation thermique selon le troisième mode de réalisation fonctionne de la même manière que les dispositifs d'isolation thermique selon le premier et le deuxième modes de réalisation. Les feuilles isolantes 36 des deux dispositifs écrans sont commandées simultanément par la rotation des premier 82 et deuxième 84 arbres de traction.

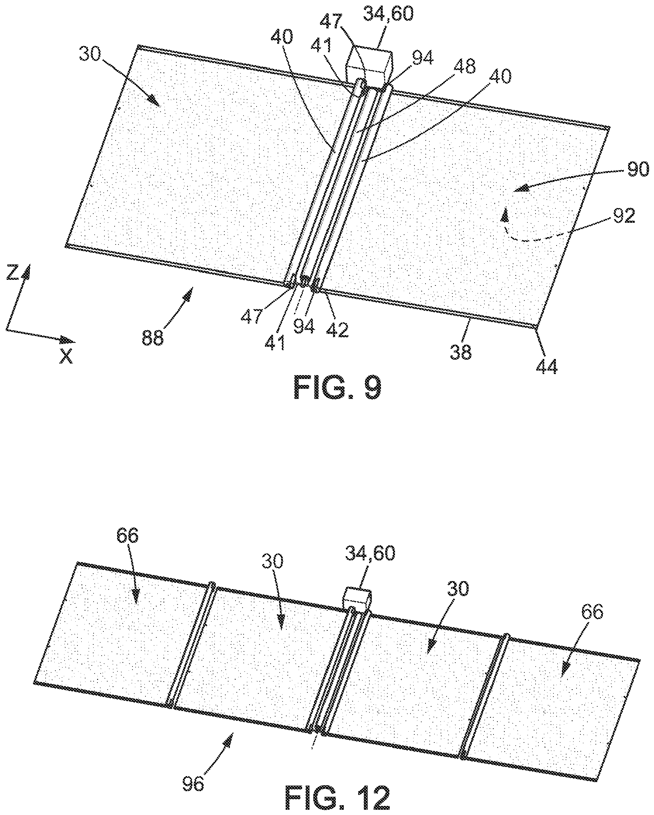

En référence à la figure 9, le dispositif d'isolation thermique 88 selon un **cinquième mode de réalisation** de l'invention, est identique au dispositif d'isolation thermique 38 selon le premier mode de réalisation à l'exception du fait qu'il comporte un deuxième dispositif écran 90 propre à recouvrir une deuxième zone 92 adjacente à la première zone 32.

Le premier 30 et le deuxième 90 dispositifs écrans sont entraînés en déplacement par le même dispositif de traction 34, 60. Ainsi, les feuilles isolantes du premier 30 et deuxième 90 dispositifs écrans sont enroulées sur les tiges de support 40 simultanément et par le même dispositif de traction 34, 60. Ce dispositif de traction peut comprendre un actionneur 54 ou un dispositif d'amortissement 62.

Dans ce cinquième mode de réalisation, le deuxième dispositif écran 90 est disposé de l'autre côté du dispositif de traction 34, 60. L'arbre de traction 48 est ainsi agencé entre le premier dispositif écran 30 et le deuxième dispositif écran 90.

Le deuxième dispositif écran 90 comprend des deuxièmes butées 94 fixées sur le radiateur de l'autre côté de l'arbre de traction 48 au droit des premières butées 47 du premier dispositif écran.

La tige de support 40 du deuxième dispositif écran 90 s'étend parallèlement à la tige de support 40 du premier dispositif écran 30.

La première extrémité 42 des ressorts du deuxième dispositif écran est fixée à la tige de support 40. La seconde extrémité 44 des ressorts du deuxième dispositif écran est fixée au radiateur par les moyens de fixation 46. Mais, les ressorts 38 du deuxième dispositif écran sont montés sur la feuille isolante en sens inverse des ressorts 38 du premier dispositif écran. Et les câbles 41 du deuxième dispositif écran 90 sont enroulés sur l'arbre de traction 48 en un sens d'enroulement opposé au sens d'enroulement des câbles 41 du premier dispositif écran 30. En conséquence, le dispositif de traction 34, 60 applique un effort de traction aux ressorts 38 du deuxième dispositif écran en un sens inverse de la direction de traction T.

Au repos, les ressorts 38 du premier dispositif écran s'enroulent sur la tige de support 40 selon un premier sens d'enroulement S1. Les ressorts 58 du deuxième dispositif écran s'enroulent sur la tige de support 40 selon un deuxième sens d'enroulement S2. Le deuxième sens d'enroulement S2 est opposé au premier sens d'enroulement S1.

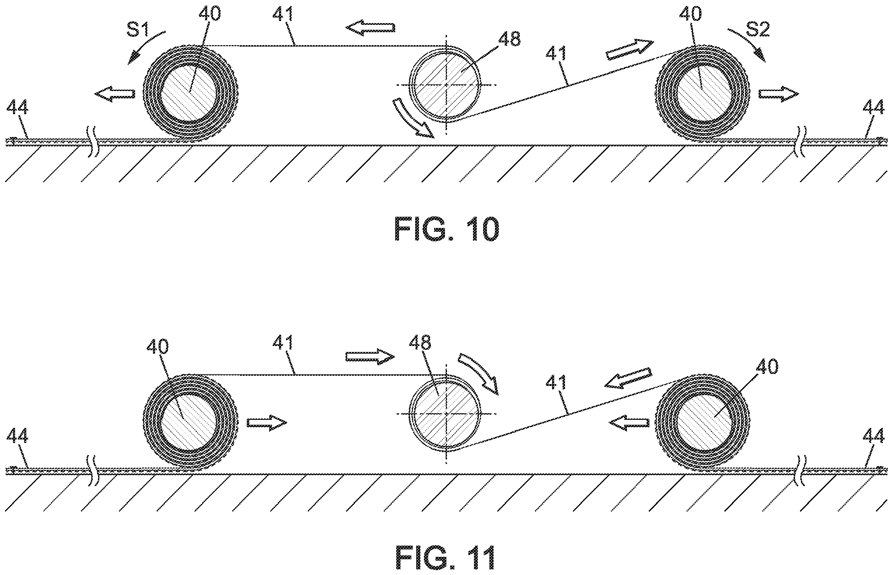

Selon l'exemple représenté sur la figure 10, lors du mode d'exposition, l'arbre de traction 48 est mis en rotation selon un sens antihoraire. Les ressorts 58 du premier dispositif écran s'enroulent sur la tige de support selon un sens anti horaire. Les ressorts 58 du deuxième dispositif écran s'enroulent sur la tige de support 40 selon un sens horaire.

La feuille isolante du premier dispositif écran 30 s'enroule en se déplaçant en un sens inverse de la direction X. La feuille isolante du deuxième dispositif écran 90 s'enroule en se déplaçant dans le sens de la direction X.

En référence à la figure 11, lors du mode de déploiement, l'arbre de traction 48 est mis en rotation selon un sens horaire. Les ressorts 58 du premier dispositif écran se déroulent selon un sens horaire. Les ressorts 58 du deuxième dispositif écran se déroulent selon un sens anti-horaire. La feuille isolante du premier dispositif écran 30 se déroule en se déplaçant dans le sens de la direction X. La feuille isolante du deuxième dispositif écran 90 se déroule en se déplaçant dans le sens inverse de la direction X.

Selon le troisième, le quatrième et le cinquième modes de réalisation représentés sur les figures 7 à 9, la feuille isolante 36 du deuxième dispositif écran 66, 76 présente la même longueur Lo et la même largeur La que la feuille isolante 36 du premier dispositif écran 30. En variante, la longueur Lo et/ou la largeur La de la feuille isolante 36 du deuxième dispositif écran 66,76 peuvent être différente de la longueur Lo et/ou la largeur La de la feuille isolante 36 du premier dispositif écran 30.

Selon une variante non représentée des troisième, quatrième et cinquième modes de réalisation, la feuille isolante 36 du premier dispositif écran 30 présente une longueur Lo supérieure à la longueur Lo de la feuille isolante 36 du deuxième dispositif écran 90. Pour permettre une exposition et un déploiement par le même arbre de traction, ce dernier porte au moins deux poulies de diamètre supérieur au diamètre de l'arbre de traction, lesdits câbles du deuxième dispositif écran étant enroulés sur ces poulies.

Selon une autre variante non représentée des troisième, quatrième et cinquième modes de réalisation, la feuille isolante du premier dispositif écran 30 présente une largeur La supérieure à la largeur La du deuxième dispositif écran.

Selon un **sixième mode de réalisation** de l'invention représentée sur la figure 12, le dispositif d'isolation thermique 96 comporte deux dispositifs écrans situé d'un côté de l'arbre de traction 48 et deux autres dispositifs écran situé de l'autre côté de l'arbre de traction. Les feuilles isolantes de ces quatre dispositifs écrans sont déplacés par le même dispositif de traction 34, 60. Ce dispositif de traction peut comprendre un actionneur 54 ou un dispositif d'amortissement 62.

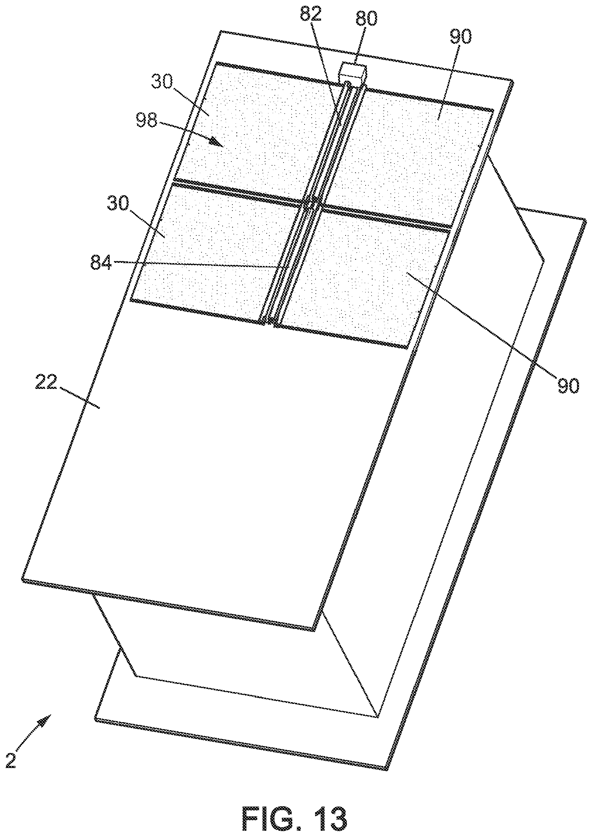

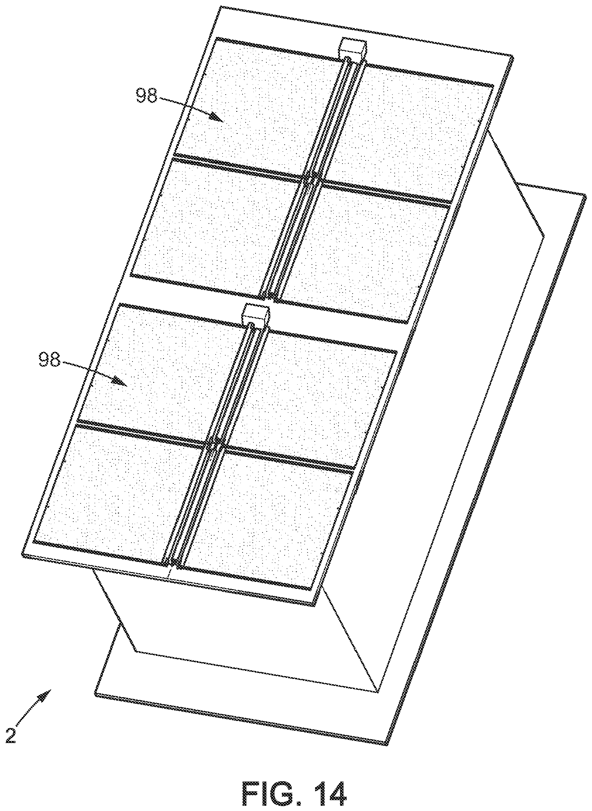

Selon un **septième mode de réalisation** de l'invention représentée sur les figures 13 et 14, le dispositif d'isolation thermique 98 comporte quatre dispositifs écrans et un dispositif de traction 80 propre à déplacer en même temps les quatre dispositifs écrans.

Le dispositif de traction 80 possède un premier arbre de traction 82 et un deuxième arbre de traction 84. Le deuxième arbre de traction 84 est monté sur le même axe A-A que le premier arbre de traction 82. Un premier 30 et un deuxième 90 dispositifs écrans sont agencés de part et d'autre du premier arbre de traction 82. Un premier 30 et un deuxième 90 dispositifs écrans sont agencés de part et d'autre du deuxième arbre de traction 84.

La figure 14 représente un exemple d'utilisation de deux dispositifs d'isolation thermique 98 selon le septième mode de réalisation de l'invention sur un même radiateur d'un engin spatial.

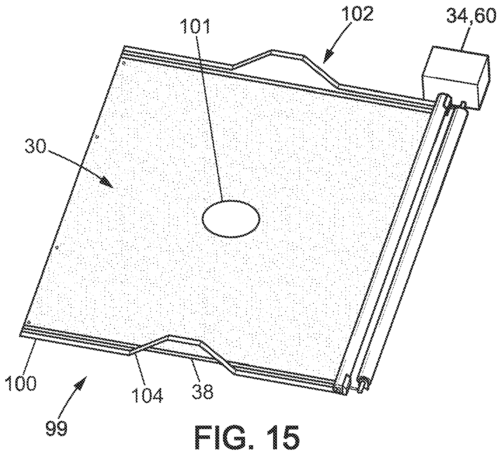

En référence à la figure 15, le dispositif d'isolation thermique 99 selon un **huitième mode de réalisation** de l'invention, est identique au dispositif d'isolation thermique 38 selon le premier mode de réalisation à l'exception du fait
que la feuille isolante 36 comporte en outre une ouverture 101,
que les tiges de support 40 présente une longueur supérieure à la largeur La de la feuille isolante et
qu'il comporte en outre deux rampes 100, 102 fixées sur la face principale externe du radiateur.

Les rampes 100, 102 s'étendent selon la direction de traction T de part et d'autre des bords longitudinaux 43, 45 de la feuille isolante.

Les rampes 100, 102 présentent des portions de rampe 104 qui s'étendent en saillie par rapport au radiateur. En particulier, les portions de rampe 104 s'étendent dans un plan perpendiculaire à la face principale externe du radiateur 22, 23. Les extrémités des tiges de support sont propres à venir en appui contre lesdites rampes 100, 102 au cours du mode d'exposition ou au cours du mode de déploiement. Ainsi, avantageusement, les rampes 100, 102 permettent de faire passer la tige de support au- dessus d'un obstacle de la mise en place ou de l'enroulement de la feuille isolante.

Lorsque le dispositif écran est dans un mode déployé et que la feuille isolante recouvre la zone du radiateur à isoler, les ressorts et la feuille isolante sont plaqués contre le radiateur. L'ouverture 101 est traversée par un équipement s'étendant en saillie par rapport au radiateur tel que par exemple un émetteur.

En variante, les ressorts sont en appui contre les rampes.

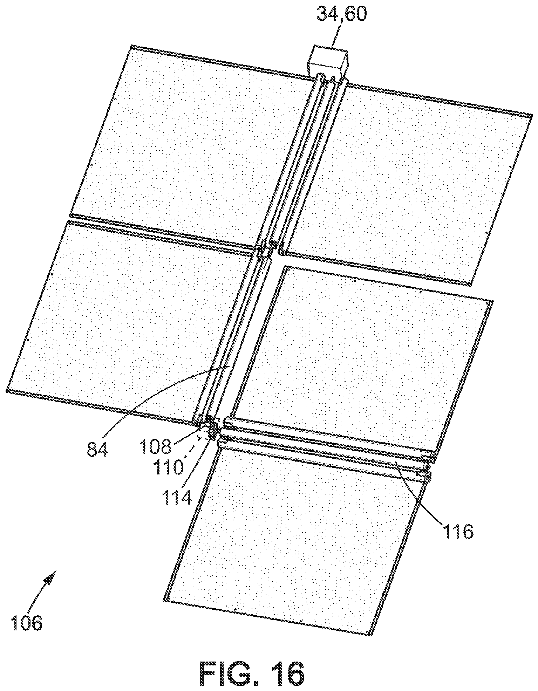

En référence à la figure 16, le dispositif d'isolation thermique 106 selon un **neuvième mode de réalisation** de l'invention, est identique au dispositif d'isolation thermique selon le septième mode de réalisation à l'exception du fait qu'un des dispositifs écrans fixé au deuxième arbre de traction 84 est remplacé par un premier mécanisme d'engrenage 108 fixé à l'extrémité libre du deuxième arbre de traction 84, un dispositif de renvoi d'angle 110 couplé au premier mécanisme d'engrenage 108, un troisième arbre de traction 116 ayant un deuxième mécanisme d'engrenage 114 couplé au dispositif de renvoi d'angle 110 et deux dispositifs écrans supplémentaires fixés par des câbles au troisième arbre de traction 116. L'arbre de traction supplémentaire 116 s'étendant selon la direction de traction T.

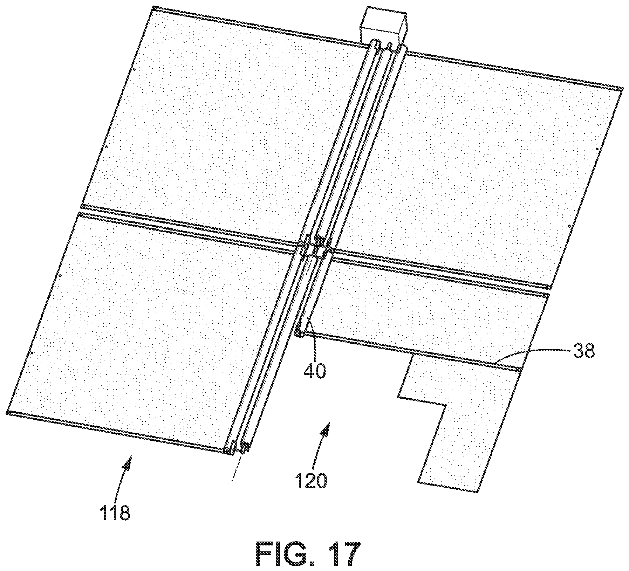

En référence à la figure 17, le dispositif d'isolation thermique 118 selon un **dixième mode de réalisation** de l'invention, est identique au dispositif d'isolation thermique selon le septième mode de réalisation à l'exception du fait qu'une des feuilles isolantes 36 présente une ou plusieurs découpes 120. Dans ce mode de réalisation, la tige de support est plus courte et le ressort s'étend en partie sur le du bord longitudinal de la feuille isolante et en partie dans l'intérieure de la feuille isolante. Ce mode de réalisation permet de ne pas couvrir de façon délibérer une partie du radiateur ou contourner un équipement qui pourrait être fixé sur le radiateur 22. Un tel équipement est par exemple un émetteur ou un bras d'un panneau solaire.

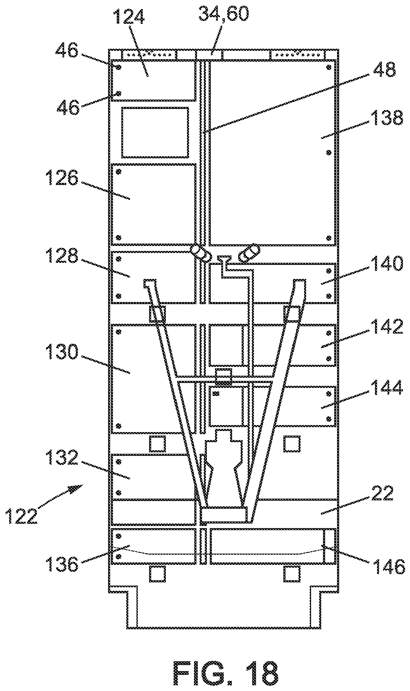

La figure 18 représente un exemple d'utilisation d'un dispositif d'isolation thermique 122 fixé sur un radiateur 22 d'un engin spatial. Ce dispositif d'isolation thermique 122 possède un unique arbre de traction 48, six dispositifs écrans 124, 126, 128, 130, 132, 136 agencés à droite de l'unique arbre de traction 48 et cinq dispositifs écrans 138, 140, 142, 144, 146 agencé à gauche de l'arbre de traction.

En variante, il est également possible d'utiliser des arbres de traction 48 dont le diamètre n'est pas homogène sur toute leur longueur. Dans le cas d'un mode de réalisation utilisant plusieurs dispositifs écrans, cela permet, pour une même vitesse de rotation de l'arbre de traction 48, d'obtenir très simplement et très efficacement des vitesses de déroulement des câbles différentes (et donc des dispositifs écrans différents).

Le fonctionnement des dispositifs d'isolation thermique décrits dans l'invention peut être contrôlé de plusieurs façons : soit par l'envoi de télécommandes depuis le sol, soit automatiquement depuis le bord par l'intermédiaire d'un dispositif de contrôle thermique interne au satellite.

Un tel contrôle (depuis le sol ou depuis le bord) a pour objectif de déterminer à quel instant se font les opérations suivantes :
- le déverrouillage du dispositif de déverrouillage 52
- le passage à un mode de déploiement ou à un mode d'exposition, pour quelle durée, avec quelle amplitude de mouvement (déploiement partiel ou intégral) et pour quel dispositif écran.

L'avantage du dispositif d'isolation thermique selon l'invention est sa simplicité et sa généricité permettant de réaliser de nombreuses économies en temps de qualification et de montage, et de réduction des risques sur les programmes satellite utilisant de tels dispositifs. En effet, l'invention utilise un module de base qui peut être qualifié une fois pour toutes. Chaque nouveau programme satellite peut ensuite combiner, tel un puzzle, un ou plusieurs de ces dispositifs en fonction de la configuration externe des murs du satellite, tout en bénéficiant de la qualification préalable du module de base.

L'invention pourrait également être utilisée comme dispositif d'isolation thermique sur les faces X des satellites, et également comme système d'occultation thermique pour les instruments optiques tels que des télescopes.

Le dispositif selon l'invention est applicable pour des satellites de télécommunications ou d'observation opérés sur tout type d'orbite (LEO, MEO, HEO, GEO), et également pour des missions spatiales scientifiques (sondes) ayant des temps de transferts longs.

## Revendications

1. Engin spatial (2) comprenant une caisse (4) ayant au moins une face (16, 18), au moins un radiateur (22, 23) porté par ladite face (16, 18), et au moins un dispositif d'isolation thermique (28,58,64,74,88,96,98,99,106,118,122) porté par le radiateur (22,23), ledit dispositif d'isolation thermique (28,58,64,74,88,96,98, 99,106,118,122) comprenant :
- un premier dispositif écran (30) apte à recouvrir une première zone (32) dudit radiateur (22, 23), ledit premier dispositif écran (30) comprenant une feuille thermiquement isolante (36) et souple, et
- un dispositif de traction (34, 60) propre à tirer selon une direction de traction (T) pour que la feuille isolante (36) recouvre la première zone (32) dans un mode dit mode déployé
**caractérisé en ce que** ledit dispositif d'isolation thermique (28,58,64,74,88,96,98, 99,106,118,122) comprend en outre au moins deux ressorts (38) propres à produire un effort de réaction constant, lesdits ressorts (38) étant préformés de manière à s'enrouler sur eux-mêmes au repos, lesdits ressorts (38) étant fixés sur la feuille isolante (36), lesdits ressorts (38) ayant chacun une première extrémité (42) fixée à un dispositif de traction (34,60) et une seconde extrémité (44) fixée sur le radiateur (22, 23);
et **en ce que** le dispositif de traction (34, 60) est configuré pour tirer sur la première extrémité (42) desdits ressorts du premier dispositif écran, ledit dispositif de traction (34, 60) étant apte à libérer la première extrémité (42) desdits ressorts pour exposer la première zone (32) vers l'espace dans un mode dit mode d'exposition.

2. Engin spatial (2) selon la revendication 1, dans lequel le premier dispositif écran (30) comporte au moins deux câbles (41), chaque câble étant solidaire dudit dispositif de traction (34,60) et de la première extrémité (42) des ressorts, lesdits câbles (41) étant intercalés entre deux enroulements des ressorts (38) dans le mode d'exposition.

3. Engin spatial (2) selon l'une quelconque des revendications 1 et 2, dans lequel le premier dispositif écran (30) comporte en outre une tige de support (40) s'étendant selon une direction perpendiculaire à la direction de traction (T) et au moins deux premières butées (47) fixées sur le radiateur (22, 23) entre la feuille isolante (36) et le dispositif de traction (34,60), lesdites premières butées (37) étant propres à caler la tige de support (40) au cours du lancement de l'engin spatial.

4. Engin spatial (2) selon l'une quelconque des revendications 1 à 3, dans lequel le dispositif de traction (34,60) comporte :
- un arbre de traction (48) monté rotatif autour d'un axe de rotation (A-A), ledit arbre de traction (48) s'étendant perpendiculairement à la direction de traction (T), la première extrémité (42) desdits ressorts (38) étant solidaires dudit arbre de traction (48) ; et
- un dispositif de verrouillage (52) de la rotation de l'arbre de traction (48) autour dudit axe de rotation (A-A).

5. Engin spatial (2) selon la revendication 4, dans lequel le dispositif de traction (34) comporte un actionneur (54) propre à entraîner en rotation l'arbre de traction (48).

6. Engin spatial (2) selon la revendication 4, dans lequel le dispositif de traction (60) comporte en outre un dispositif d'amortissement (62) propre à amortir la rotation de l'arbre de traction (48), lorsque le dispositif de verrouillage (52) est déverrouillé.

7. Engin spatial (2) selon l'une quelconque des revendications 1 à 6, dans lequel le dispositif d'isolation thermique (64,74) comporte en outre un deuxième dispositif écran (66,76) apte à recouvrir une deuxième zone (68,78), ledit deuxième dispositif écran (66,76) étant identique au premier dispositif écran (30), les ressorts (38) dudit deuxième dispositif écran (66,76) s'étendant parallèlement à la direction de traction (T).

8. Engin spatial (2) selon la revendication 7, dans lequel le premier dispositif écran (30) et le deuxième dispositif écran (66,76) sont agencés d'un même côté du dispositif de traction (34, 60), et dans lequel, dans le mode d'exposition, les ressorts (38) du premier dispositif écran et les ressorts (38) du deuxième dispositif écran (66,76) s'enroulent sur eux-mêmes selon une même direction d'enroulement.

9. Engin spatial (2) selon la revendication 8, dans lequel la feuille isolante (36) du deuxième dispositif écran (66) est disposée dans le prolongement de la feuille isolante (36) du premier dispositif écran (30) selon la direction de traction (T).

10. Engin spatial (2) selon la revendication 8, dans lequel la feuille isolante (36) du deuxième dispositif écran (76) est disposée dans le prolongement de la feuille isolante (36) du premier dispositif écran (30) selon une direction perpendiculaire à la direction de traction (T).

11. Engin spatial (2) selon la revendication 7, dans lequel le dispositif de traction (34, 60) est agencé entre le premier dispositif écran (30) et le deuxième dispositif écran (90) et dans lequel, dans le mode d'exposition, les ressorts (38) du premier dispositif écran s'enroulent sur eux-mêmes selon un premier sens d'enroulement (S1) et les ressorts (38) du deuxième dispositif écran s'enroulent sur eux-mêmes selon un deuxième de sens d'enroulement (S2), le deuxième sens d'enroulement (S2) étant opposée au premier sens d'enroulement (S1).

12. Engin spatial (2) selon la combinaison des revendications 2, 4 et 11, dans lequel la feuille isolante (36) du premier dispositif écran (30) présente une longueur (Lo) supérieure à la longueur (Lo) de la feuille isolante (36) du deuxième dispositif écran (66, 76, 90), ladite longueur (Lo) étant mesurée selon la direction de traction (T), et dans lequel l'arbre de traction (48) supporte au moins deux poulies de diamètre supérieur au diamètre de l'arbre de traction (48), lesdits câbles du deuxième dispositif écran (66, 76, 90) s'enroulés sur lesdites poulies.

13. Engin spatial (2) selon l'une quelconque des revendications 11 et 12, dans lequel la feuille isolante (36) du premier dispositif écran (30) présente une largeur (La) supérieure à la largeur (La) du deuxième dispositif écran (66, 76, 90), ladite largeur (La) étant mesurée selon une direction perpendiculaire à la direction de traction (T).

14. Engin spatial (2) selon l'une quelconque des revendications 11 à 13, dans lequel le premier dispositif écran (30) comporte au moins deux rampes (100 , 102) fixées au radiateur (22, 23) selon une direction parallèle à la direction de traction (T), au moins l'un parmi les ressorts (38) et les extrémités des tiges de support étant propres à venir en appui contre lesdites rampes (100 , 102) dans le mode déployé, lesdits rampes (100 , 102) présentant des portions de rampe (104) qui s'étendent en saillie par rapport au radiateur (22, 23).

15. Engin spatial (2) selon l'une quelconque des revendications 1 à 14, dans lequel au moins un bord de la feuille isolante présente au moins une découpe.

16. Engin spatial selon l'une quelconque des revendications 4 à 15, qui comporte un premier mécanisme d'engrenage (108) fixé à l'extrémité libre d'un arbre de traction (84), un dispositif de renvoi d'angle (110) couplé au premier mécanisme d'engrenage (108), un arbre de traction supplémentaire (112) ayant un deuxième mécanisme d'engrenage (114) couplé au dispositif de renvoi d'angle (110) et au moins un dispositif écran supplémentaire (116) fixé par des câbles à l'arbre de traction supplémentaire (112); l'arbre de traction supplémentaire (112) s'étendant selon la direction de traction (T).

17. Engin spatial (2) selon l'une quelconque des revendications 1 à 16, dans lequel lesdits ressorts (38) sont des feuillards plat en acier inoxydable en forme de ruban, lesdits feuillards ayant une largeur comprise entre 5 et 30 millimètres.

18. Engin spatial (2) selon l'une quelconque des revendications 1 à 15, dans lequel la feuille isolante (36) est une feuille de Kapton recouverte d'une couche d'aluminium.

## Patentansprüche

1. Raumfahrzeug (2), umfassend ein Gehäuse (4), welches wenigstens eine Fläche (16, 18), wenigstens einen an der Fläche (16, 18) getragenen Radiator (22, 23) und wenigstens eine von dem Radiator (22, 23) getragene Vorrichtung zur thermischen Isolation (28, 58, 64, 74, 88, 96, 98, 99, 106, 118, 122) umfasst, wobei die Vorrichtung zur thermischen Isolation (28, 58, 64, 74, 88, 96, 98, 99, 106, 118, 122) umfasst:
- eine erste Abschirmvorrichtung (30), welche in der Lage ist, eine erste Zone (32) des Radiators (22, 23) zu bedecken, wobei die erste Abschirmvorrichtung (30) eine thermisch isolierende und biegsame Bahn (36) umfasst, und
- eine Zugvorrichtung (34, 36), welche geeignet ist, entlang einer Zugrichtung (T) zu ziehen, in welcher die isolierende Bahn (36) die erste Zone (32) in einem als ausgebreitet bezeichneten Modus bedeckt,
**dadurch gekennzeichnet, dass** die Vorrichtung zur thermischen Isolation (28, 58, 64, 74, 88, 96, 98, 99, 106, 118, 122) ferner wenigstens zwei Federn (38) umfasst, welche geeignet sind, eine konstante Reaktionskraft zu erzeugen, wobei die Federn (38) in einer Weise vorgeformt sind, dass sie sich im Ruhezustand auf sich selbst aufrollen, wobei die Federn (38) an der isolierenden Bahn (36) befestigt sind, wobei die Federn (38) jeweils ein erstes Ende (42), welches an einer Zugvorrichtung (34, 60) befestigt ist, und ein zweites Ende (44) aufweisen, welches an dem Radiator (22, 23) befestigt ist;
und dadurch, dass die Zugvorrichtung (34, 60) dazu eingerichtet ist, an dem ersten Ende (42) der Federn der ersten Abschirmvorrichtung zu ziehen, wobei die Zugvorrichtung (34, 60) in der Lage ist, das erste Ende (42) der Federn freizugeben, um die erste Zone (32) in Richtung des Raums in einem als Expositionsmodus bezeichneten Modus zu exponieren.

2. Raumfahrzeug (2) nach Anspruch 1, wobei die erste Abschirmvorrichtung (30) wenigstens zwei Kabel (41) umfasst, wobei jedes Kabel mit der Zugvorrichtung (34, 60) und dem ersten Ende (42) der Federn verbunden ist, wobei die Kabel (41) zwischen zwei Wicklungen der Federn (38) in dem Expositionsmodus eingefügt sind.

3. Raumfahrzeug (2) nach einem der Ansprüche 1 und 2, wobei die erste Abschirmvorrichtung (30) ferner eine Tragestange (40), welche sich entlang einer Richtung senkrecht zu der Zugrichtung (T) erstreckt, und wenigstens zwei erste Anschläge (47) umfasst, welche an dem Radiator (22, 23) zwischen der isolierenden Bahn (36) und der Zugvorrichtung (34, 60) befestigt sind, wobei die ersten Anschläge (37) dazu geeignet sind, die Tragestange (40) im Verlauf des Starts des Raumfahrzeugs zu stützen.

4. Raumfahrzeug (2) nach einem der Ansprüche 1 bis 3, wobei die Zugvorrichtung (34, 60) umfasst:
- eine Zugwelle (48), welche rotierbar um eine Rotationsachse (A-A) montiert ist, wobei sich die Zugwelle (48) senkrecht zu der Zugrichtung (T) erstreckt, wobei das erste Ende (42) der Federn (38) mit der Zugwelle (48) verbunden ist; und
- eine Vorrichtung zum Verriegeln (52) der Rotation der Zugwelle (48) um die Rotationsachse (A-A).

5. Raumfahrzeug (2) nach Anspruch 4, wobei die Zugvorrichtung (34) ein Betätigungselement (54) umfasst, welches geeignet ist, die Zugwelle (48) in Rotation anzutreiben.

6. Raumfahrzeug (2) nach Anspruch 4, wobei die Zugvorrichtung (60) ferner eine Dämpfungsvorrichtung (62) umfasst, welche dazu geeignet ist, die Rotation der Zugwelle (48) zu dämpfen, wenn die Vorrichtung zum Verriegeln (52) entriegelt ist.

7. Raumfahrzeug (2) nach einem der Ansprüche 1 bis 6, wobei die Vorrichtung zur thermischen Isolation (64, 74) ferner eine zweite Abschirmvorrichtung (66, 76) umfasst, welche in der Lage ist, eine zweite Zone (68, 78) zu bedecken, wobei die zweite Abschirmvorrichtung (66, 76) identisch zu der ersten Abschirmvorrichtung (30) ist, wobei sich die Federn (38) der zweiten Abschirmvorrichtung (66, 76) parallel zu der Zugrichtung (T) erstrecken.

8. Raumfahrzeug (2) nach Anspruch 7, wobei die erste Abschirmvorrichtung (30) und die zweite Abschirmvorrichtung (66, 76) an einer gleichen Seite der Zugvorrichtung (34, 60) platziert sind, und wobei sich in dem Expositionsmodus die Federn (38) der ersten Abschirmvorrichtung und die Federn (38) der zweiten Abschirmvorrichtung (66, 76) entlang einer gleichen Aufrollrichtung auf sich selbst aufrollen.

9. Raumfahrzeug (2) nach Anspruch 8, wobei die isolierende Bahn (36) der zweiten Abschirmvorrichtung (66) in der Verlängerung der isolierenden Bahn (36) der ersten Abschirmvorrichtung (30) entlang der Zugrichtung (T) angeordnet ist.

10. Raumfahrzeug (2) nach Anspruch 8, wobei die isolierende Bahn (36) der zweiten Abschirmvorrichtung (76) in der Verlängerung der isolierenden Bahn (36) der ersten Abschirmvorrichtung (30) entlang einer Richtung senkrecht zu der Zugrichtung (T) angeordnet ist.

11. Raumfahrzeug (2) nach Anspruch 7, wobei die Zugvorrichtung (34, 60) zwischen der ersten Abschirmvorrichtung (30) und der zweiten Abschirmvorrichtung (90) angeordnet platziert ist, und wobei sich in dem Expositionsmodus die Federn (38) der ersten Abschirmvorrichtung gemäß einem ersten Aufrollsinn (S1) auf sich selbst aufrollen und sich die Federn (38) der zweiten Abschirmvorrichtung gemäß einem zweiten Aufrollsinn (S2) auf sich selbst aufrollen, wobei der zweite Aufrollsinn (S2) dem ersten Aufrollsinn (S1) entgegengesetzt ist.

12. Raumfahrzeug (2) nach der Kombination der Ansprüche 2, 4 und 11, wobei die isolierende Bahn (36) der ersten Abschirmvorrichtung (30) eine Länge (Lo) aufweist, welche größer als die Länge (Lo) der isolierenden Bahn (36) der zweiten Abschirmvorrichtung (66, 76, 90) ist, wobei die Länge (Lo) entlang der Zugrichtung (T) gemessen wird, und wobei die Zugwelle (48) wenigstens zwei Rollen von einem Durchmesser trägt, welcher größer als der Durchmesser der Zugwelle (48) ist, wobei sich die Kabel der zweiten Abschirmvorrichtung (66, 76, 90) auf die Rollen aufrollen.

13. Raumfahrzeug (2) nach einem der Ansprüche 11 und 12, wobei die isolierende Bahn (36) der ersten Abschirmvorrichtung (30) eine Größe (La) aufweist, welche größer als die Größe (La) der zweiten Abschirmvorrichtung (66, 76, 90) ist, wobei die Größe (La) entlang einer Richtung senkrecht zu der Zugrichtung (T) gemessen wird.

14. Raumfahrzeug (2) nach einem der Ansprüche 11 bis 13, wobei die erste Abschirmvorrichtung (30) wenigstens zwei Rampen (100, 102) umfasst, welche an dem Radiator (22, 23) gemäß einer Richtung parallel zu der Zugrichtung (T) befestigt sind, wobei wenigstens eines aus den Federn (38) und den Enden der Tragestangen dazu geeignet ist, in Anlage gegen die Rampen (100, 102) in dem ausgebreiteten Modus zu kommen, wobei die Rampen (100, 102) Rampenabschnitte (104) aufweisen, welche sich vorstehend bezüglich des Radiators (22, 23) erstrecken.

15. Raumfahrzeug (2) nach einem der Ansprüche 1 bis 14, wobei wenigstens ein Rand der isolierenden Bahn wenigstens einen Ausschnitt aufweist.

16. Raumfahrzeug nach einem der Ansprüche 4 bis 15, welches einen ersten Verzahnungsmechanismus (108), welcher an dem freien Ende der Zugwelle (84) befestigt ist, eine Vorrichtung zum Rückstellen des Winkels (110), welche mit dem ersten Verzahnungsmechanismus (108) gekoppelt ist, eine zusätzliche Zugwelle (112), welche einen zweiten Verzahnungsmechanismus (114) aufweist, welcher mit der Vorrichtung zum Rückstellen des Winkels (119) gekoppelt ist, und wenigstens eine zusätzliche Abdeckungsvorrichtung (116) umfasst, welche durch Kabel an der zusätzlichen Zugwelle (112) befestigt ist; wobei sich die zusätzliche Zugwelle (112) entlang der Zugrichtung (T) erstreckt.

17. Raumfahrzeug (2) nach einem der Ansprüche 1 bis 16, wobei die Federn (38) ebene Stahlbänder aus rostfreiem Stahl in Streifenform sind, wobei die Stahlbänder eine Größe aufweisen, welche zwischen 5 und 30 Millimeter beträgt.

18. Raumfahrzeug (2) nach einem der Ansprüche 1 bis 15, wobei die isolierende Bahn (36) eine Bahn aus Kapton ist, welche mit einer Aluminiumschicht bedeckt ist.

## Claims

1. Spacecraft (2) comprising a body (4) having at least one face (16, 18), at least one radiator (22, 23) carried by said face (16, 18) and at least one thermal insulation device (28,58,64,74,88,96,98,99,106,118,122) carried by the radiator (22,23), said thermal insulation device (28,58,64,74, 88,96,98, 99,106,118,122) comprising:
- a first screen device (30) able to cover a first area (32) of said radiator (22, 23), said first screen device (30) comprising a thermally insulating and flexible sheet (36) and
- a traction device (34, 60) able to pull in a pulling direction (T) so that the insulating sheet (36) covers the first area (32) in a mode referred to as deployed mode
**characterized in that** said thermal insulation device (28,58,64,74, 88,96,98, 99,106,118,122) further comprises at least two springs (38) able to generate a constant reaction force, said springs (38) being preformed so as to roll onto themselves at rest, said springs (38) being fixed to the insulating sheet (36), said springs (38) each having a first end (42) fixed to a traction device (34,60) and a second end (44) fixed to the radiator (22, 23);
and **in that** the traction device (34, 60) is configured to pull on the first end (42) of said springs of the first screen device, said traction device (34, 60) being able to release the first end (42) of said springs in order to expose the first area (32) to the space environment in a mode referred to as exposure mode.

2. Spacecraft (2) according to claim 1, wherein the first screen device (30) comprises at least two cables (41), each cable being integrally secured to said traction device (34,60) and to the first end (42) of the springs, said cables (41) being interposed between two windings of the springs (38) in exposure mode.

3. Spacecraft (2) according to any one of claims 1 and 2, wherein the first screen device (30) further comprises a support rod (40) extending in a direction perpendicular to the pulling direction (T) and at least two first stops (47) fixed to the radiator (22, 23) between the insulating sheet (36) and the traction device (34,60), said first stops (37) being able to wedge the support rod (40) in place during launch of the spacecraft.

4. Spacecraft (2) according to any one of claims 1 to 3, wherein the traction device (34,60) comprises:
- a traction shaft (48) mounted so as to rotate about an axis of rotation (A-A), said traction shaft (48) extending perpendicularly to the pulling direction (T), the first end (42) of said springs (38) being integrally secured to said traction shaft (48); and
- a device (52) for locking the rotation of the traction shaft (48) about said axis of rotation (A-A).

5. Spacecraft (2) according to claim 4, wherein the traction device (34) comprises an actuator (54) able to rotate the traction shaft (48).

6. Spacecraft (2) according to claim 4, wherein the traction device (60) further comprises a damping device (62) able to damp the rotation of the traction shaft (48) when the locking device (52) is unlocked.

7. Spacecraft (2) according to any one of claims 1 to 6, wherein the thermal insulation device (64,74) further comprises a second screen device (66,76) able to cover a second area (68,78), said second screen device (66,76) being identical to the first screen device (30), the springs (38) of said second screen device (66,76) extending parallel to the pulling direction (T).

8. Spacecraft (2) according to claim 7, wherein the first screen device (30) and the second screen device (66,76) are arranged on the same side of the traction device (34, 60), and wherein, in exposure mode, the springs (38) of the first screen device and the springs (38) of the second screen device (66,76) are rolled onto themselves in a same rolling direction.

9. Spacecraft (2) according to claim 8, wherein the insulating sheet (36) of the second screen device (66) is arranged in the extension of the insulating sheet (36) of the first screen device (30), along the pulling direction (T).

10. Spacecraft (2) according to claim 8, wherein the insulating sheet (36) of the second screen device (76) is arranged in the extension of the insulating sheet (36) of the first screen device (30), along a direction perpendicular to the pulling direction (T).

11. Spacecraft (2) according to claim 7, wherein the traction device (34, 60) is arranged between the first screen device (30) and the second screen device (90) and wherein, in exposure mode, the springs (38) of the first screen device are rolled onto themselves in a first rolling direction (S1) and the springs (38) of the second screen device are rolled onto themselves in a second rolling direction (S2), the second rolling direction (S2) being opposite to the first rolling direction (S1).

12. Spacecraft (2) according to the combination of claims 2, 4, and 11, wherein the insulating sheet (36) of the first screen device (30) has a length (Lo) greater than the length (Lo) of the insulating sheet (36) of the second screen device (66, 76, 90), said length (Lo) being measured in the pulling direction (T), and wherein the traction shaft (48) supports at least two pulleys having a diameter greater than the diameter of the traction shaft (48), said cables of the second screen device (66, 76, 90) being wound on said pulleys.

13. Spacecraft (2) according to any one of claims 11 and 12, wherein the insulating sheet (36) of the first screen device (30) has a width (La) greater than the width (La) of the second screen device (66, 76, 90), said width (La) being measured in a direction perpendicular to the pulling direction (T).

14. Spacecraft (2) according to any one of claims 11 to 13, wherein the first screen device (30) comprises at least two ramps (100, 102) fixed to the radiator (22, 23) in a direction parallel to the pulling direction (T), at least one among the springs (38) and the ends of the support rods being able to bear against said ramps (100, 102) in deployed mode, said ramps (100, 102) having ramp portions (104) which protrude relative to the radiator (22, 23).

15. Spacecraft (2) according to any one of claims 1 to 14, wherein at least one edge of the insulating sheet has at least one cutout.

16. Spacecraft according to any of claims 4 to 15, which comprises a first gear mechanism (108) fixed to the free end of a traction shaft (84), a bevel gear device (110) coupled to the first gear mechanism (108), an additional traction shaft (112) having a second gear mechanism (114) coupled to the bevel gear device (110), and at least one additional screen device (116) fixed by cables to the additional traction shaft (112); the additional traction shaft (112) extending along the pulling direction (T).

17. Spacecraft (2) according to any one of claims 1 to 16, wherein said springs (38) are flat strips of stainless steel in the form of a ribbon, said strips having a width between 5 and 30 millimeters.

18. Spacecraft (2) according to any one of claims 1 to 15, wherein the insulating sheet (36) is a sheet of Kapton covered with an aluminum layer.
